# FASCICULE DE BREVET EUROPEEN

(11) **EP 3 499 970 B1**
(45) Date de publication et mention de la délivrance du brevet: **15.07.2020**
(21) Numéro de dépôt: 18213143.3
(22) Date de dépôt: 17.12.2018
(51) Int. Cl.: H04L 12/721, H04W 28/16, H04W 40/12

(54) **PROCÉDÉ D'ALLOCATION DYNAMIQUE DE RESSOURCES RADIO, PROCÉDÉS DE TRANSMISSION ET DE RÉCEPTION D'UN FLUX DE DONNÉES ENRICHI ASSOCIÉS**
DYNAMISCHES ZUORDNUNGSVERFAHREN VON FUNKRESSOURCEN, ÜBERTRAGUNGS- UND EMPFANGSVERFAHREN EINES ANGEREICHERTEN FLUSSES VON ENTSPRECHENDEN DATEN
METHOD FOR DYNAMIC ALLOCATION OF RADIO RESOURCES, ASSOCIATED METHODS FOR TRANSMITTING AND RECEIVING AN ENRICHED DATA STREAM

(30) Priorité: 18.12.2017 FR 1701317
(43) Date de publication de la demande: 19.06.2019
(73) Titulaire: Thales, 92400 Courbevoie (FR)
(72) Inventeur: CHEVALLIER, Michel, 92622 Gennevilliers cedex (FR); DELATTRE, Michel, 92622 Gennevilliers cedex (FR); SOULIE, Antoine, 92622 Gennevilliers cedex (FR)
(74) Mandataire: Lavoix

(56) Documents cités:
- EP-A2- 1 059 792
- WO-A1-2016/126109
- US-A1- 2017 290 049

## Description

La présente invention concerne un procédé d'allocation dynamique de ressources radio mis en oeuvre par un dispositif d'allocation dynamique de ressources radio d'un réseau de télécommunication à ressources partagées comprenant également au moins : un routeur, un générateur de flux de données, un gestionnaire de bordure correspondant à un point de contrôle d'accès à un cœur de réseau comprenant pluralité de sous-réseaux radio, un sous-réseau radio regroupant une pluralité de liaisons radios établies entre une pluralité d'équipements radio.

L'invention concerne également un dispositif d'allocation dynamique de ressources radio propre à mettre en œuvre le procédé d'allocation dynamique de ressources radio précité.

L'invention concerne également un procédé de transmission d'un flux de données enrichi mis en œuvre par un routeur d'un réseau de télécommunication à ressources partagées, le réseau comprenant également au moins : un générateur de flux de données, un gestionnaire de bordure correspondant à un point de contrôle d'accès à un cœur de réseau comprenant une pluralité de sous-réseaux radio, un sous-réseau radio comprenant une pluralité de liaisons radios établies entre une pluralité d'équipements radio.

L'invention concerne également un routeur d'un réseau de télécommunication à ressources partagées propre à mettre en œuvre le procédé de transmission d'un flux de données enrichi précité.

L'invention concerne également un procédé de réception d'un flux de données enrichi d'un indicateur de programmation d'acheminement de flux au sein d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur de réseau comprenant une pluralité de sous-réseaux radio, un sous-réseau radio comprenant une pluralité de liaisons radios établies entre une pluralité d'équipements radio, le procédé de réception étant mis en œuvre par un desdits équipements radio pour acheminer le flux au sein d'un sous-réseau.

L'invention concerne également un équipement radio propre à mettre en œuvre le procédé de réception d'un flux de données enrichi précité.

L'invention concerne également un produit programme d'ordinateur comportant des instructions logicielles qui, lorsque mis en œuvre par une unité de traitement d'informations intégrée au sein d'un dispositif d'allocation dynamique de ressources radio, ou intégrée au sein d'un routeur, ou intégrée au sein d'un équipement radio, mettent en œuvre respectivement le procédé d'allocation dynamique précité ou le procédé de transmission d'un flux de données enrichi précité, ou le procédé de réception d'un flux de données enrichi précité.

L'invention concerne la transmission de données, notamment des données multimédia ou des documents XML, en temps réel sur un réseau de communication utilisant le protocole IP, la transmission de données dans le cœur du réseau s'effectuant au moyen de liaisons radios. Ces liaisons radios sont établies dans une succession de zones de couvertures, formant des sous-réseaux radio. Sous une zone de couverture, l'allocation du spectre statique est un problème majeur dans les sous-réseaux radios. Le recours aux technologies de radio cognitive comme la détection RF, la géolocalisation, la sélection dynamique de fréquence vise à assurer une bonne efficacité. Le terme radio cognitive est utilisé pour décrire un système ayant la capacité de découvrir son environnement électromagnétique et de reconnaître son cadre d'utilisation. Un tel système permet notamment d'ajuster ses paramètres de fonctionnement radio de façon dynamique et autonome et d'apprendre des résultats de ses actions et de son cadre environnemental d'exploitation. Dans ce cadre, la coopération entre équipements radio est nécessaire et, généralement, un allocateur de ressources simplifie cette coopération.

Plus précisément, l'invention concerne de tels réseaux de communication modélisés selon une architecture de réseau à définition logicielle (mieux connu sous l'acronyme anglais SDN pour « *Software-Defined Networking* »).

Une telle architecture est notamment décrite dans la demande FR 16/01840 déposée au nom de la demanderesse.

Un autre exemple de l'état l'art se trouve dans US2017/290049.

Une telle architecture basée sur une planification optimiste du réseau est avantageuse car applicable à l'acheminement de flux élastiques.

Toutefois, l'allocation dynamique de ressources radio et l'acheminement garanti de flux de données associés à de tels réseaux actuels basés sur une architecture de réseau à définition logicielle n'est pas optimal en termes de flexibilité du fait qu'il requiert un dimensionnement en ressources radio dédiés au plan de contrôle pour chaque équipement radio du réseau considéré ce qui empêche un passage à l'échelle du réseau considéré ou encore une réponse adaptée dynamiquement en temps réel aux besoins applicatifs.

Le but de l'invention est ainsi de pallier l'insuffisance de réactivité des méthodes de mise en correspondance des flux de données avec les ressources radio selon l'état de la technique, pour garantir efficacement une qualité de service de bout-en-bout du réseau tout en garantissant l'intégrité de l'allocation de ressources au sein de tels réseaux.

A cette fin l'invention a pour objet un procédé d'allocation dynamique de ressources radio mis en œuvre par un dispositif d'allocation dynamique de ressources radio d'un réseau de télécommunication à ressources partagées, le réseau comprenant également au moins : un routeur, un générateur de flux de données, un gestionnaire de bordure correspondant à un point de contrôle d'accès à un cœur de réseau comprenant une pluralité de sous-réseaux radio, un sous-réseau radio regroupant une pluralité de liaisons radios établies entre une pluralité d'équipements radio,
le procédé comprenant :
- la réception d'une demande d'engagement de ressources radio propre à acheminer un flux de données objet d'une requête d'acheminement, la demande étant émise par le gestionnaire de bordure destinataire de la requête d'acheminement formulée par le générateur de flux de données,
- en fonction des conditions de propagation associées à d'autres acheminement(s) en cours et de niveau(x) de performance attendue, la sélection des équipements radio aptes à acheminer le flux de données ainsi que les ressources radio propres à garantir son bon acheminement pendant sa durée de vie,
- l'élaboration d'éléments de programmation propres à permettre à un équipement radio d'exploiter les ressources radio sélectionnées,
- la génération d'un indicateur de programmation d'acheminement de flux comprenant au moins :
   ∘ un identifiant de l'équipement radio propre à acheminer le flux, et
   ∘ au moins un élément de programmation utilisable par l'équipement radio propre à acheminer le flux,
- la transmission de l'indicateur au gestionnaire de bordure émetteur de la demande de ressource radio.

Selon des modes de réalisation particuliers de l'invention, le procédé d'allocation dynamique de ressources radio présente également l'une ou plusieurs des caractéristiques suivantes, prise(s) isolément ou suivant toute(s) combinaison(s) techniquement possible(s) :
- l'élaboration d'éléments de programmation est cohérente avec des informations diffusées périodiquement par le dispositif d'allocation dynamique de ressources radio pour coordonner l'ensemble des équipements radio se partageant le même ensemble de ressources radio ;
- un chiffrement de l'indicateur est mis en œuvre préalablement à la transmission, le chiffrement étant effectuée au moyen d'une clé de chiffrement associée à une clé de déchiffrement uniquement connue de l'équipement radio propre à acheminer le flux et authentifiant l'origine de l'indicateur ;
- le chiffrement est un chiffrement dont le schéma est basé sur l'identité ;
- l'identifiant de l'équipement radio propre à acheminer le flux est indépendant d'un adressage des éléments constitutifs du réseau de télécommunication ;
- ledit au moins un élément de programmation appartient au groupe comprenant au moins :
   - un masque de champ invariant dans les entêtes de paquet du flux à acheminer,
   - un descripteur d'ordonnancement de flux propre à diriger le flux dans une succession de traitements adaptés à la requête d'acheminement,
   - un intervalle temporel définissant la période d'applicabilité de l'indicateur.

L'invention a également pour objet un dispositif d'allocation dynamique de ressources radio d'un réseau de télécommunication à ressources partagées comprenant également au moins : un routeur, un générateur de flux de données, un gestionnaire de bordure correspondant à un point de contrôle d'accès à un cœur de réseau comprenant une pluralité de sous-réseaux radio, un sous-réseau radio regroupant une pluralité de liaisons radios établies entre une pluralité de ressources radio,
le dispositif comprenant :
- un module de réception propre à recevoir une demande d'engagement de ressources radio, la ressource radio étant propre à acheminer un flux de données objet d'une requête d'acheminement, la demande étant émise par le gestionnaire de bordure destinataire de la requête d'acheminement formulée par le générateur de flux de données,
- un module de sélection configuré pour sélectionner des équipements radio aptes à acheminer le flux de données ainsi que les ressources radio propres à garantir son bon acheminement pendant sa durée de vie, en fonction des conditions de propagation associées à d'autres acheminement(s) en cours et de niveau(x) de performance attendue,
- un module d'élaboration propre à élaborer des éléments de programmation propres à permettre à un équipement radio d'exploiter les ressources radio sélectionnées,
- un module de génération d'un indicateur de programmation d'acheminement de flux, l'indicateur comprenant au moins :
   ∘ un identifiant de l'équipement radio propre à acheminer le flux, et
   ∘ au moins un élément de programmation utilisable par l'équipement radio propre à acheminer le flux,
- un module de transmission propre à transmettre l'indicateur au gestionnaire de bordure émetteur de la demande de ressource radio.

L'invention a également pour objet un procédé de transmission d'un flux de données enrichi au sein d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur de réseau comprenant une pluralité de liaisons radios établies entre une pluralité d'équipements radio,
le procédé de transmission étant mis en œuvre par le routeur, le procédé comprenant :
- la réception d'un indicateur de programmation d'acheminement de flux émis par le gestionnaire de bordure, l'indicateur comprenant au moins :
   ∘ un identifiant de l'équipement radio propre à acheminer le flux, et
   ∘ au moins un élément de programmation utilisable par l'équipement radio propre à acheminer le flux,
- la réception du flux de donnée, émis par le générateur de flux de données ayant au préalable requis l'acheminement du flux auprès du gestionnaire de bordure émettant l'indicateur associé,
- transmission simultanée d'un flux de données enrichi, comprenant au moins le flux de donnée et l'indicateur, à l'équipement radio propre à intercepter l'indicateur et acheminer le flux dans le sous-réseau radio en fonction de l'indicateur.

Le procédé de transmission d'un flux de données enrichi présente également la caractéristique suivante selon laquelle préalablement à la transmission simultanée du flux de donnée enrichi le procédé comprend :
- l'insertion de l'indicateur dans un entête d'un premier paquet du flux, ou
- la génération d'une signalisation de contrôle parallèle comprenant l'indicateur.

L'invention a également pour objet un routeur d'un réseau de télécommunication à ressources partagées, le réseau comprenant également au moins : un dispositif d'allocation dynamique de ressources radio, un générateur de flux de données, un gestionnaire de bordure correspondant à un point de contrôle d'accès à un cœur de réseau comprenant une pluralité de liaisons radios établies entre une pluralité de ressources radio, le routeur comprenant :
- un premier module de réception propre à recevoir un indicateur émis par le gestionnaire de bordure, l'indicateur comprenant au moins :
   ∘ un identifiant de l'équipement radio propre à acheminer le flux, et
   ∘ au moins un élément de programmation utilisable par l'équipement radio propre à acheminer le flux,
- un deuxième module de réception propre à recevoir un flux de donnée, émis par le générateur de flux de données ayant au préalable requis l'acheminement du flux auprès du gestionnaire de bordure émettant l'indicateur associé,
- un module de transmission propre à transmettre simultanément du flux de donnée et de l'indicateur à la ressource radio propre à intercepter l'indicateur et acheminer le flux dans le cœur de réseau en fonction de l'indicateur.

L'invention a également pour objet un procédé de réception d'un flux de données enrichi d'un indicateur de programmation d'acheminement de flux au sein d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur de réseau comprenant une pluralité de liaisons radios établies entre une pluralité d'équipements radio,
le procédé de réception étant mis en œuvre par un desdits équipements radio pour acheminer le flux au sein d'un sous-réseau radio, le procédé comprenant :
- la réception du flux de données et l'interception de l'indicateur de programmation d'acheminement de flux transmis simultanément par le routeur, l'indicateur comprenant au moins :
   ∘ un identifiant de l'équipement radio propre à acheminer le flux, et
   ∘ au moins un élément de programmation utilisable par l'équipement radio propre à acheminer le flux,
- la programmation de l'acheminement du flux dans le sous-réseau radio en fonction de l'indicateur de programmation d'acheminement de flux.

Selon des modes de réalisation particuliers de l'invention, le procédé de réception d'un flux de données enrichi d'un indicateur de programmation d'acheminement de flux présente également l'une ou plusieurs des caractéristiques suivantes, prise(s) isolément ou suivant toute(s) combinaison(s) techniquement possible(s) :
- l'interception d'indicateur comprend une capture instantanée d'un entête d'un premier paquet du flux de données enrichi reçu ainsi que la détection des éléments constitutifs de l'indicateur au moyen d'un dictionnaire de flux préalablement mémorisé et/ou mis à jour dans la ressource radio ;
- un déchiffrement de l'indicateur est mis en œuvre préalablement à la programmation de l'acheminement ;
- un acheminement, selon la programmation interceptée, de la suite de paquets du flux de données identifiés grâce aux éléments d'entête capturés.

L'invention a également pour objet un équipement radio d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur de réseau comprenant une pluralité de sous-réseaux radio, un sous-réseau radio regroupant une pluralité de liaisons radios établies entre ledit équipement radio et une pluralité d'autres équipements radio,
l'équipement radio comprenant :
- un module de réception propre à recevoir le flux de données et un module d'interception propre à intercepter l'indicateur de programmation d'acheminement de flux transmis simultanément par le routeur, l'indicateur comprenant au moins :
   ∘ un identifiant de l'équipement radio propre à acheminer le flux, et
   ∘ au moins un élément de programmation utilisable par l'équipement radio propre à acheminer le flux,
- un module d'acheminement propre à programmer l'acheminement du flux dans le sous-réseau radio en fonction de l'indicateur de programmation d'acheminement de flux.

L'invention concerne également un produit programme d'ordinateur comportant des instructions logicielles qui, lorsque mis en œuvre par une unité de traitement d'informations intégrée au sein d'un dispositif d'allocation dynamique de ressources radio, ou intégrée au sein d'un routeur, ou intégrée au sein d'un équipement radio, mettent en œuvre respectivement le procédé d'allocation dynamique précité ou le procédé de transmission d'un flux de données enrichi précité, ou le procédé de réception d'un flux de données enrichi précité.

D'autres caractéristiques et avantages de l'invention apparaîtront à la lecture de la description qui va suivre, donnée uniquement à titre d'exemple et faite en se référant aux dessins annexés, dans lesquels :
- la figure 1 est une représentation schématique d'un réseau de télécommunication à ressources partagées selon l'invention,
- les figures 2 à 5 illustrent différentes applications et avantages de l'invention,
- les figures 6 à 8 sont des digrammes en blocs illustrant respectivement le procédé d'allocation dynamique, le procédé de transmission d'un flux de données enrichi précité, et le procédé de réception d'un flux de données enrichi selon la présente invention.

Par la suite, par ressources radio, on entend de manière générale les moyens de diffusions par ondes radio (OTA de l'anglais « Over the air »), tels que des canaux de radiodiffusions ou ressources fréquentielle, des créneaux temporels (de l'anglais « time-slot »), des lois de codage ou de modulation.

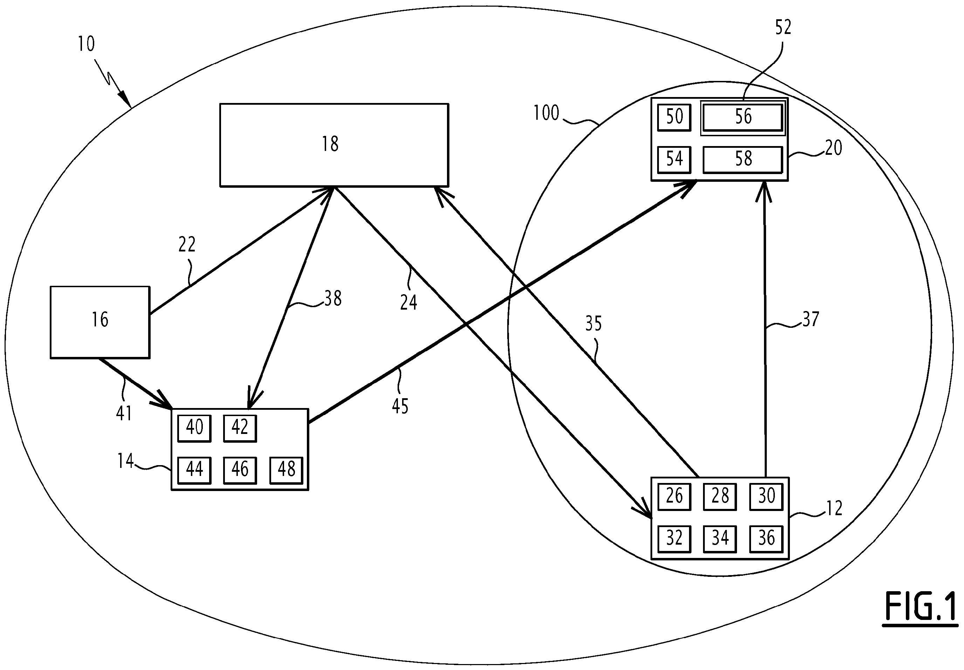

Le cœur de réseau de communication 10 de la figure 1 comprend un dispositif 12 d'allocation dynamique de ressources partagées, un routeur 14 de flux de données, un générateur 16 de flux de données, un gestionnaire de bordure 18 correspondant à un point de contrôle d'accès au cœur 10 de réseau comprenant une pluralité de sous-réseaux radio 100, un sous-réseau radio 100 comprenant une pluralité de liaisons radios établies entre une pluralité d'équipements radio 20 (i.e. des entités physiques correspondant par exemple à des émetteurs/récepteurs radio ou encore des modulateur-démodulateur (modem)) coordonnés par le dispositif d'allocation de ressources.

Plus précisément, le générateur 16 de flux de données est propre à générer un flux de données et, via une route IP (de l'anglais « Internet Protocol ») 22, à émettre une requête d'acheminement de ce flux au gestionnaire de bordure 18. Un tel générateur 16 de flux de données correspond par exemple à une application logicielle.

Le gestionnaire de bordure 18 est propre à émettre, via une route IP 24 à destination du dispositif 12 d'allocation dynamique de ressources partagées, une demande d'engagement de ressources radio propre à garantir les performances de l'acheminement du flux généré par le générateur 16 de flux de données.

Le dispositif 12 d'allocation dynamique de ressources partagées outre sa fonction classique de calcul des plans d'allocation de ressources aux équipements radio actifs est propre à répondre à la demande du gestionnaire de bordure 18.

Pour ce faire, le dispositif 12 d'allocation dynamique de ressources partagées comprend au moins :
- un module 26 de réception propre à recevoir une demande d'engagement de ressources radio, les ressources radio étant propres à acheminer un flux de données avec un niveau de performance attendu objet d'une requête d'acheminement, la demande étant émise par le gestionnaire de bordure 18 destinataire de la requête d'acheminement formulée par le générateur 16 de flux de données,
- un module 28 de sélection configuré pour sélectionner des équipements radio 20 aptes à acheminer le flux de données, ainsi que les ressources radio propres à garantir son bon acheminement (i.e. de bout en bout) pendant la durée de vie de ce flux de données, en fonction des conditions de propagation associées à d'autres acheminement(s) en cours et de niveau(x) de performance attendue,
- un module 30 d'élaboration propre à élaborer des éléments de programmation propres à permettre à un équipement radio d'exploiter les ressources radio sélectionnées,
- un module 32 de génération d'un indicateur de programmation d'acheminement de flux, l'indicateur comprenant au moins :
   ∘ un identifiant de l'équipement radio propre à acheminer le flux, et
   ∘ au moins un élément de programmation utilisable par l'équipement radio propre à acheminer le flux,
- un module 34 de transmission propre à transmettre l'indicateur au gestionnaire 18 de bordure, notamment via la liaison 35.

En particulier, la requête d'acheminement émise par le générateur 16 de flux de données et relayée par la demande du gestionnaire de bordure 18 fournit une donnée de priorité opérationnelle et une loi de service à respecter correspondant par exemple à un besoin applicatif, ces éléments étant ensuite convertis par le dispositif 12 d'allocation dynamique de ressources partagées en bande passante à prévoir et en occurrence d'accès.

Par la suite, par « condition de propagation », on entend l'état de propagation en temps réel au sein de l'environnement électromagnétique de la zone de couverture considérée afin que les ressources radio sélectionnées garantissent le bon acheminement du flux de bout-en-bout. En d'autres termes, le module 28 de sélection prend en compte en temps réel la capacité radio des ressources radio pilotée par le dispositif 12 d'allocation dynamique et le besoin applicatif associé à la requête d'acheminement formulée par le générateur de flux de données.

De plus, par « niveau(x) de performance attendue » on entend notamment les performances en termes de gigue à respecter, de temps de latence maximal, de débit minimum à servir, de durée de service, de taux d'erreur perçu de bout-en-bout, etc.

Plus précisément, ledit au moins un élément de programmation de l'indicateur de programmation appartient au groupe comprenant au moins :
- un masque de champ invariant dans les entêtes de paquet du flux à acheminer, un tel masque étant utilisable par l'équipement radio 20 identifié par l'identifiant pour programmer la reconnaissance du flux à acheminer.
- un descripteur d'ordonnancement de flux propre à diriger le flux dans une succession de traitements adaptés à la requête d'acheminement,
- un intervalle temporel définissant la période d'applicabilité de l'indicateur de programmation.

De plus, selon un aspect particulier de l'invention, le dispositif 12 d'allocation dynamique de ressources partagées comprend un module 36 de chiffrement propre à chiffrer l'indicateur et à délivrer un indicateur de programmation chiffré en entrée du module de transmission 34. Le chiffrement mis en œuvre par le module de chiffrement 36 étant effectué au moyen d'une clé de chiffrement associée à une clé de déchiffrement uniquement connue de l'équipement radio 20 propre à acheminer le flux, la clé de chiffrement authentifiant par ailleurs l'origine de l'indicateur.

L'utilisation d'un tel module 36 de chiffrement permet ainsi de conserver et garantir la sécurité des échanges de signalisation au sein d'un sous-réseau radio 100 du cœur de réseau 10 de la figure 1 comprenant au moins le routeur 14 de flux radio, le générateur 16 de flux de données, le gestionnaire de bordure 18 et au moins un équipement radio 20. En effet, grâce au chiffrement, l'intégrité de l'indicateur de programmation est « scellée » rendant l'équipement radio résistant aux attaques par déni de service distribuée (DDOS de l'anglais « *Distributed Déniai of Service attack* »), l'équipement radio 20 destinataire de l'indicateur de programmation étant propre grâce au chiffrement effectué à valider que l'indicateur de programmation a bien été généré par le dispositif d'allocation dynamique autorisé et que lui-même est bien le destinataire autorisé ce qui rend impossible tout détournement des ressources allouées à l'équipement radio 20.

Le dispositif 12 d'allocation dynamique de ressources partagées est également propre à mettre à jour l'allocation dynamique de ressources notamment par diffusion des plans d'allocation, au moyen de la liaison radio 37, à l'équipement radio 20 alloué pour l'acheminement du flux de données considéré.

Le gestionnaire 18 de bordure propre à recevoir l'indicateur de programmation précité, le cas échant chiffré, est propre également à le réémettre, via la liaison 37, au routeur 14.

Le routeur 14 est propre à mettre en œuvre une transmission de flux de données enrichi. Pour ce faire, un tel routeur comprend notamment :
- un module 40 de réception propre à recevoir l'indicateur de programmation d'acheminement de flux émis, via la liaison 38, par le gestionnaire 18 de bordure, l'indicateur comprenant au moins :
   ∘ un identifiant de l'équipement radio 20 propre à acheminer le flux, et
   ∘ au moins un élément de programmation utilisable par l'équipement radio 20 propre à acheminer le flux,
- un module 42 de réception propre à recevoir le flux de donnée F, émis, via la liaison 41, par le générateur 16 de flux de données ayant au préalable requis l'acheminement du flux auprès du gestionnaire 18 de bordure émettant l'indicateur de programmation associé,
- un module 44 de transmission propre à mettre en œuvre une transmission, via la liaison 45, simultanée d'un flux de données enrichi, comprenant au moins le flux de donnée et l'indicateur, à l'équipement radio 20 propre à intercepter l'indicateur et acheminer le flux dans le sous-réseau radio100 en fonction de l'indicateur.

Selon un aspect particulier de l'invention, le routeur 14 comprend en outre un module 46 d'insertion propre à insérer l'indicateur dans un entête d'un premier paquet du flux, ou un module 48 de génération d'une signalisation de contrôle parallèle comprenant l'indicateur. Une telle signalisation est par exemple conforme au protocole réseau RTCP (de l'anglais « *Real-time Transport control Protocol* ») reposant sur des transmissions périodiques de paquets de contrôle ou encore au protocole réseau RSVP (de l'anglais *« Resource ReSerVation Protocol »*).

L'activation et l'exécution mise en œuvre par le module d'insertion 46 est propre à être effectuée simultanément à l'exécution d'un calcul de route de bout-en-bout conforme au protocole MPLS (de l'anglais « *Multi Protocol Label Switching »*) ou par routage de segment (de l'anglais « *Segment Routing »*).

L'équipement radio 20 destinataire du flux de données enrichi émis via la liaison 45 par le routeur 14 comprend quant à lui au moins :
- un module 50 de réception propre à recevoir le flux de données et un module 52 d'interception propre à intercepter l'indicateur de programmation d'acheminement de flux transmis simultanément par le routeur 14, l'indicateur comprenant au moins :
   ∘ un identifiant de l'équipement radio 20 propre à acheminer le flux, et
   ∘ au moins un élément de programmation utilisable par l'équipement radio 20 propre à acheminer le flux,
- un module 54 d'acheminement propre à programmer l'acheminement du flux dans le sous-réseau radio 100 en fonction de l'indicateur de programmation d'acheminement de flux, ce module étant propre à mettre en œuvre au moins :
   ∘ une classification de paquets permettant de repérer les paquets d'un flux,
   ∘ un ordonnancement des paquets à émettre vers un équipement radio distant, et
   ∘ une logique de codage et de modulation de l'information à émettre sur le médium radio.

Selon un aspect particulier de l'invention, le module 52 d'interception comprend un outil 56 de capture instantanée d'un entête d'un premier paquet du flux de données enrichi reçu ainsi que la détection des éléments constitutifs de l'indicateur guidée au moyen d'un dictionnaire de flux préalablement mémorisé et/ou mis à jour dans un espace mémoire (non représenté) de l'équipement radio 20.

Selon un autre aspect particulier de l'invention, l'équipement radio 20 comprend également un module 58 de déchiffrement propre à déchiffrer l'indicateur et à la fournir en entrée du module 54 d'acheminement.

Chaque entité 12, 14, 16, 18, 20, du réseau 10 comprend par exemple une unité de traitement d'informations, non représentée, formée de préférence d'un processeur et d'une mémoire associée au processeur. Les modules/outil 26, 28, 30, 32, 34, 36, 40, 42, 44, 48, 50, 52, 54, 56, 58 sont alors, par exemple, réalisés chacun sous forme d'un logiciel apte à être stocké dans la mémoire et apte à être exécuté par le processeur.

En variante, les modules/outil 26, 28, 30, 32, 34, 36, 40, 42, 44, 48, 50, 52, 54, 56, 58 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit*).

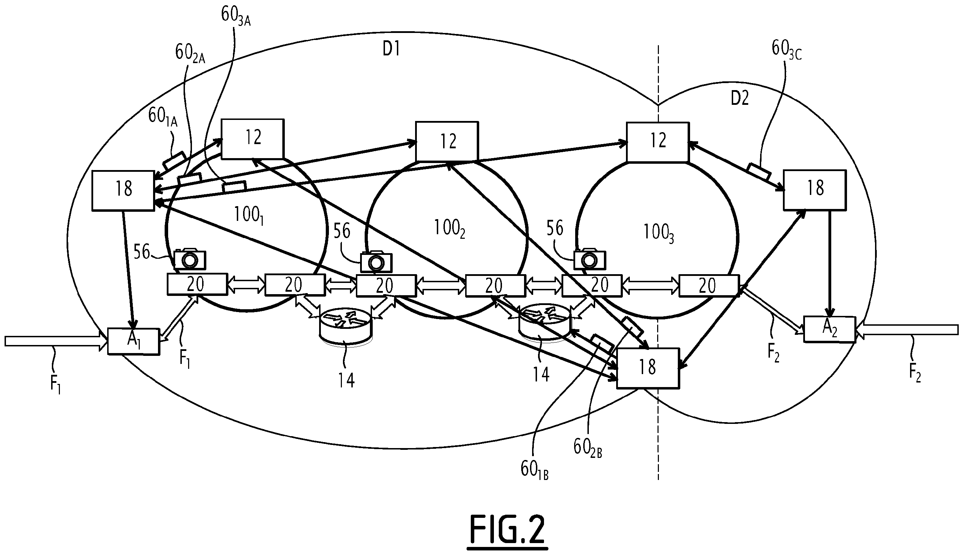

En relation avec la figure 2, l'application du système radio selon la présente invention à une cascade de cœurs de réseaux radio 100₁, 100₂, 100₃ est illustrée schématiquement.

Pour une telle application, la présente invention présente l'avantage d'être applicable à la traversée de plusieurs sous-réseaux radio successifs 100₁, 100₂, 100₃, le sous- réseau radio 100₃ étant par ailleurs sur deux domaines réseaux D₁ et D₂ associés à des protocoles internet IP₁ et IP₂ (IP pour « *Internet Protocol* » en anglais) distincts utilisés par les générateurs de flux 16 (non représentés) pour générer respectivement un flux F₁ et un flux F₂ transitant respectivement par deux points d'accès réseau distincts A₁ et A₂.

En effet, chaque dispositif 12 d'allocation dynamique de ressources associé à des sous-réseaux distincts 100₁, 100₂, 100₃ génère un indicateur de programmation 60_{1A}, 60_{1A}, 60_{2A}, 60_{3A}, 601_{B}, 60_{2B}, 60_{3C} en fonction du flux à acheminer et du sous-réseau 100 concerné.

Ainsi, les indicateurs de programmation sont propres à être empilés en entrée de domaine D1 ou D2 au niveau des gestionnaires de bordure 18 et à être dépilés au fur et à mesure par les équipements radio 20 concernés.

En effet, comme indiqué précédemment, chaque indicateur de programmation (également appelé « ticket » ou « jeton » (correspondant à « *token* ») en anglais), notamment chiffré, comprend un identifiant de l'équipement radio 20 auquel l'acheminement du flux est alloué, si bien que seul l'équipement radio 20 d'entrée de sous-réseau 100 (en anglais « *ingress* ») par lequel le flux de données considéré entre dans le sous-réseau, et identifié par l'indicateur est propre à traiter le flux à acheminer considéré, sous réserve que l'indicateur de programmation (i.e. le jeton) ne soit pas corrompu. En outre, chaque indicateur de programmation 60_{1A}, 60_{1A}, 60_{2A}, 60_{3A}, 60_{1B}, 60_{2B}, 60_{3C} comprend les règles de reconnaissance de flux propre au sous-réseau radio 100 considéré et à l'équipement radio 20 alloué pour acheminer le flux, l'équipement radio 20 visé est propre à mettre à jour son filtre de reconnaissance de flux, par exemple à partir de l'entête du paquet portant l'indicateur de programmation qui ne peut être décodé que par l'équipement radio 20 visé.

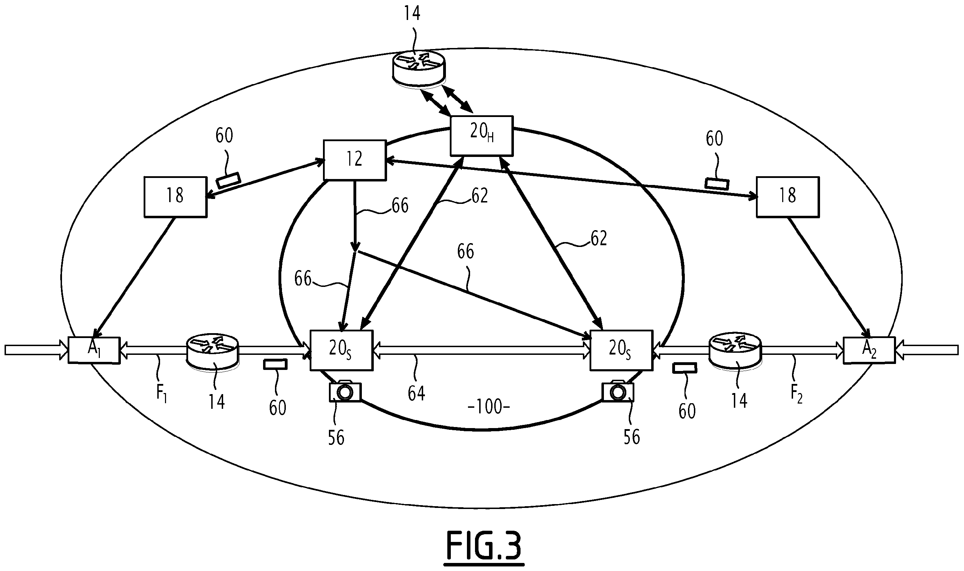

La figure 3 illustre l'application du système radio selon la présente invention à un changement de connectivité entre :
- une connectivité centralisée de base représentée par les liaisons 62 correspondant à des échanges pour chaque équipement radio distant 20_{S} (dit « spoke » en anglais) avec un équipement radio central 20_{H} (dit « hub » en anglais), autrement dit tout échange par l'équipement radio central 20_{H}, et
- une connectivité directe 64 (dite « short cut » en anglais) entre équipements radio distant 20_{S}.

Selon la présente invention, un tel passage à l'échelle est aisé du fait que le dispositif 12 d'allocation dynamique de ressources partagées à uniquement besoin de modifier le plan d'allocation (par exemple, les créneaux temporels d'émission associés à une connectivité directe), qu'il transmet via les liaisons 66, et adapte en conséquence la capacité des indicateurs de programmation 60 qui contiennent les règles de reconnaissance de flux et, le cas échéant, les règles d'accès radio pour le flux de données F₁ ou F₂ considéré. A réception de tels indicateurs de programmation 60 les équipements radio distants 20_{S} mettent à jour leur filtre de reconnaissance de flux à partir de l'entête paquet du paquet portant l'indicateur de programmation 60 et le flux associé F₁ ou F₂ utilise le chemin réseau correspondant à la liaison directe entre les deux équipements radio distants 20_{S}.

Ainsi, grâce à l'invention une connexion directe entre équipements radio distants 20_{S} est possible par simple ajout d'échanges par contournement (OTT pour « over-the-top » en anglais).

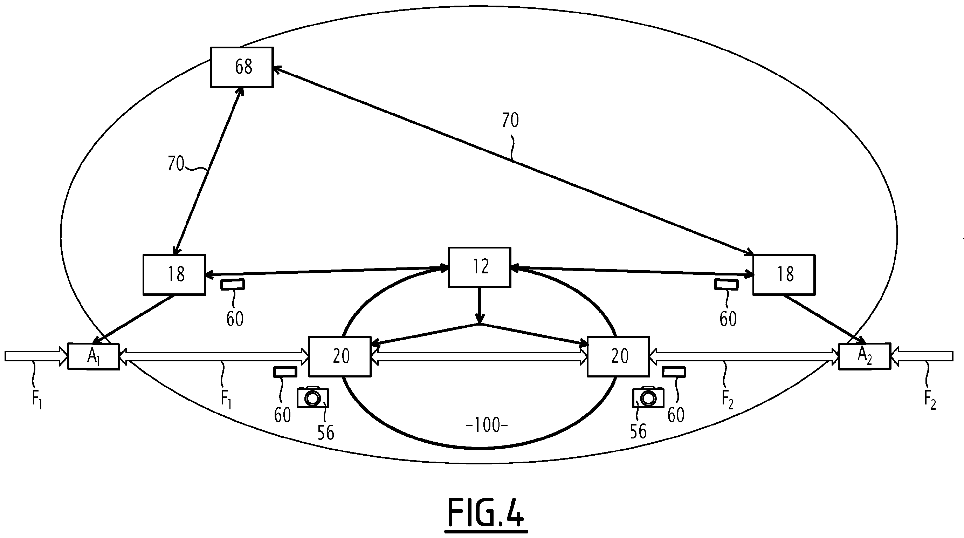

La figure 4 illustre l'application du système radio selon la présente invention à une demande de réservation de service pour une durée d par exemple pour réserver des réunions virtuelles ou encore une conférence vidéo. Une telle demande de réservation de service est générée par une application logicielle 68, via des liaisons dédiées 70 auprès des gestionnaires de bordures 18.

Selon la présente invention, une telle demande de réservation est propre à être effectuée préalablement à toute connaissance des entêtes de flux du fait que c'est l'indicateur de programmation 60 qui permet d'adapter en temps réel l'acheminement du flux et l'allocation dynamique des ressources partagées du réseau. Ainsi, selon l'invention et tel que représenté sur la figure 4, le dispositif 12 d'allocation dynamique de ressources partagées est propre à être sollicité par l'application logicielle 68, via le gestionnaire de bordure 18, avant même le début de la génération de flux en tant que telle, notamment dans un contexte de réservation de service.

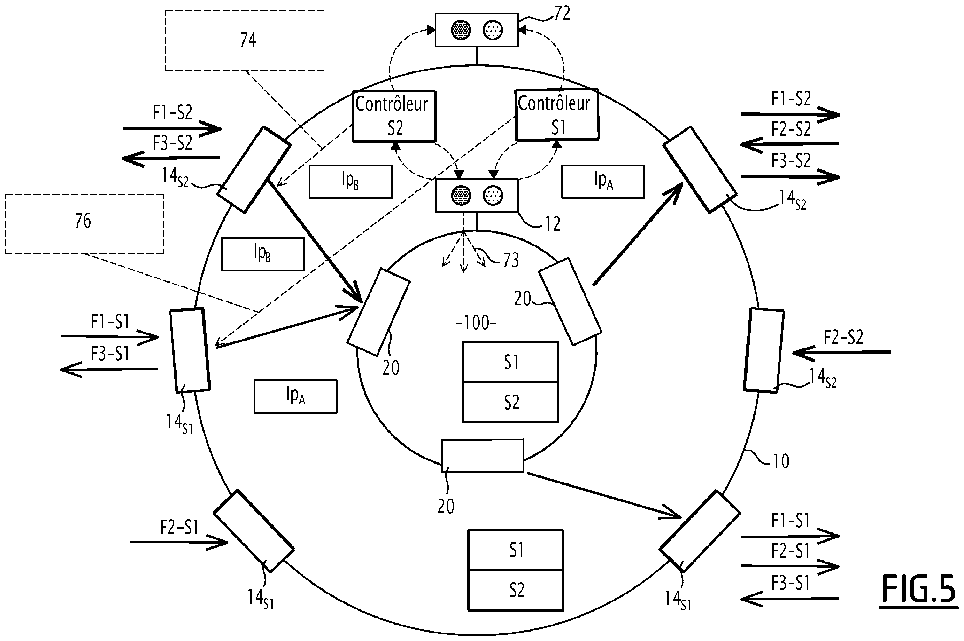

La figure 5 illustre l'application dans un contexte de découpage en temps réel du réseau en tranches S1 et S2 avec des qualités de service différenciées selon les usages (« *network slicing* » en anglais). En particulier, sur la figure 5, le dispositif 12 d'allocation dynamique de ressources partagées diffuse, selon les liaisons 73, le plan d'allocation dynamique au sein du sous-réseau et associe à chaque tranche S1 et S2 un indicateur de programmation qui lui est propre Ip_{A} et Ip_{B} qu'il transmet à chaque contrôleur de tranche Contrôleur S1 et Contrôleur S2 respectivement.

Ces contrôleurs sont par ailleurs associés à un calculateur 72 de routage de bout-en-bout, et également chacun respectivement associés à un ensemble de routeurs 14_{S1} et 14_{S2} auquel ils transmettent respectivement deux ensembles d'information 74 pour la tranche S2 et 76 pour la tranche S1. Plus précisément, l'ensemble d'information 74 comprend des directives de routage, par exemple de routage par segment (« *segment routing* » en anglais), l'indicateur de programmation Ip_{B} et des informations de régulation des flux d'entrée/sortie associé à la tranche S2, tandis que l'ensemble d'information 76 comprend des directives de routage, l'indicateur de programmation Ip_{A} et des informations de régulation des flux d'entrée/sortie associé à la tranche S1.

Les routeurs 14_{S1} et 14_{S2} sont propres à router des associations flux-tranches, par exemple F1-S1 ou F3-S1 entrantes ou sortantes pour les routeurs 14_{S1}, en les enrichissant comme indiqué précédemment avec l'indicateur de programmation Ip_{A} et Ip_{B} associé respectivement aux tranches S1 et S2 lors de leur transmission à un équipement radio 20 pour acheminement dans le sous-réseau 100.

Ainsi, la mise en œuvre de l'invention au sein d'un réseau découpés en tranche, autrement dit la combinaison de la présente invention avec le « network slicing » permet d'optimiser les avantages du « network slicing » à savoir une compétition des flux pour des ressources, la compétition étant régulée de bout-en-bout au point d'entrée sortie d'une tranche S1 ou S2 et la possibilité de mettre en œuvre un protocole TCP (de l'anglais « *Transmission Control Protocol* ») coordonné avec l'allocation dynamique radio, avec les avantages de la présente invention à savoir une flexibilité maximale du fait qu'un partage à priori du réseau radio est évitée et du fait qu'une adaptation en temps réel en fonction des besoins opérationnels et des variations de connectivité est possible par la génération et l'utilisation de l'indice de programmation Ip_{A} ou Ip_{B}.

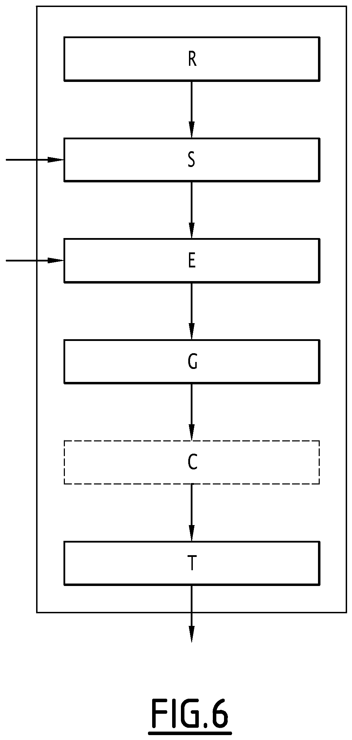

Le fonctionnement du système radio illustré par la figure 1 va désormais être expliqué en regard des figures 6 à 8 illustrant respectivement le procédé d'allocation dynamique, le procédé de transmission et le procédé de réception selon la présente invention.

En relation avec la figure 6, le procédé d'allocation dynamique de ressources radio mis en œuvre par le dispositif 12 d'allocation dynamique de ressources radio comprend une première étape R de réception d'une demande de ressource(s) radio propre(s) à acheminer un flux de données objet d'une requête d'acheminement, la demande étant émise par le gestionnaire 18 de bordure destinataire de la requête d'acheminement formulée par le générateur 16 de flux de données. En particulier, la demande émise par le gestionnaire 18 cible le résultat à atteindre sans pour autant imposer une attribution figée de ressources radio.

Selon une étape S, le dispositif 12 d'allocation dynamique de ressources radio met ensuite en œuvre, la sélection des équipements radio aptes à acheminer le flux de données ainsi que les ressources radio propres à garantir son bon acheminement pendant sa durée de vie en fonction des conditions de propagation associées à d'autres acheminement(s) en cours et de niveau(x) de performance attendue.

Cette étape S est suivie d'une étape E d'élaboration d'éléments de programmation propres à permettre à un équipement radio 20 d'exploiter les ressources radio sélectionnées.

En particulier, ledit au moins un élément de programmation appartient au groupe comprenant au moins :
- un masque de champ invariant dans les entêtes de paquet du flux à acheminer, utilisable par l'équipement radio pour programmer la reconnaissance du flux à acheminer,
- un descripteur d'ordonnancement de flux propre à diriger le flux dans une succession de traitements adaptés à la requête d'acheminement,
- un intervalle temporel définissant la période d'applicabilité de l'indicateur.

En particulier, l'élaboration E d'éléments de programmation est cohérente avec des informations diffusées périodiquement par le dispositif 12 d'allocation dynamique de ressources radio pour coordonner l'ensemble des équipements radio d'une zone de couverture se partageant le même ensemble de ressources radio.

Par « cohérent » on entend que l'élaboration vise à optimiser le plan d'allocation de ressources en minimisant le volume d'informations à diffuser pour être portées à la connaissance de tous les équipements 20 radio, et en minimisant le volume d'informations propres au service considéré à mettre en œuvre, et ce en s'appuyant sur les informations diffusées périodiquement par le dispositif 12 d'allocation dynamique de ressources radio, notamment en fonction du protocole utilisé tel que WiMAX, Wi-Fi, SATCOM, etc. Par exemple, une information diffusée périodiquement correspond à l'identifiant d'un réseau sans fil Wi-Fi (SSID pour « *Service Set Identifier* » en anglais).

L'étape d'élaboration E est ensuite suivie par une étape G génération G d'un indicateur de programmation 60 d'acheminement de flux comprenant au moins :
∘ un identifiant de l'équipement radio 20 propre à acheminer le flux, et
∘ au moins un élément de programmation utilisable par l'équipement radio 20 propre à acheminer le flux.

Selon un aspect particulier optionnel, l'étape E est suivie avantageusement en termes d'intégrité, d'une étape C de chiffrement de l'indicateur, le chiffrement C étant effectuée au moyen d'une clé de chiffrement associée à une clé déchiffrement uniquement connue de l'équipement radio propre à acheminer le flux et authentifiant l'origine de l'indicateur.

Selon une variante particulière de cet aspect le schéma du chiffrement est basé sur l'identité (IBE pour « *Identity-based Encryption* ») propre à procurer une flexibilté de déploiements communication. En effet, en utilisant un tel chiffrement, le dispositif 12 d'allocation dynamique de ressources radio n'a à connaître que l'identité de l'équipement radio 20 et l'équipement radio 20 n'a à mémoriser sa clé de déchiffrement que lors de son "entrée dans le réseau" (un équipement débranché efface sa clé et son branchement peut être soumis à une procédure liant identification / authentification / autorisation).

L'étape suivante T de transmission est alors mise en œuvre et consiste en la transmission de l'indicateur de programmation 60 au gestionnaire 18 de bordure émetteur de la demande de ressource(s) radio.

Une fois ce procédé d'allocation dynamique mis en œuvre par le dispositif d'allocation dynamique 12, le gestionnaire de bordure 18 renvoie l'indicateur de programmation 60 au(x) routeur(s) 14 et la réservation des ressources au niveau de l'allocation dynamique est mise en œuvre. De plus, selon une étape non représentée effectuée via la liaison 37 de la figure 1, l'allocateur dynamique transmet le plan d'allocation aux équipements radio 20 du réseau.

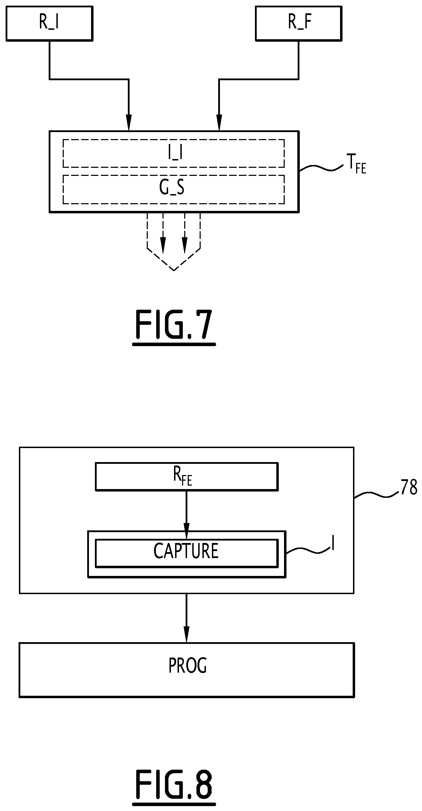

Le routeur 14 met alors en œuvre le procédé de transmission d'un flux de données enrichi illustré par la figure 7.

Plus précisément, selon une étape R_I, le routeur 14 met en œuvre la réception de l'indicateur de programmation d'acheminement de flux émis par le gestionnaire de bordure 18, l'indicateur de programmation comprenant au moins, comme indiqué précédemment :
∘ un identifiant de l'équipement radio propre à acheminer le flux, et
∘ au moins un élément de programmation utilisable par l'équipement radio propre à acheminer le flux.

En parallèle, on consécutivement, une étape R_F de réception du flux de donnée, émis par le générateur 16 de flux de données ayant au préalable requis l'acheminement du flux auprès du gestionnaire 18 de bordure émettant l'indicateur associé est mise en œuvre par le routeur 14.

Puis, une étape T_{FE} aboutissant à la transmission simultanée d'un flux de données enrichi, comprenant au moins le flux de donnée et l'indicateur, à l'équipement radio 20 propre à intercepter l'indicateur et acheminer le flux dans le sous-réseau en fonction de l'indicateur.

En particulier, préalablement à la transmission en tant que telle, l'étape T_{FE} comprend, selon une première variante, une étape I_I d'insertion de l'indicateur de programmation 60 dans un entête d'un premier paquet du flux, ou une étape G_S de génération d'une signalisation de contrôle parallèle comprenant l'indicateur de programmation 60.

L'équipement radio 20 identifié par l'indicateur de programmation met alors en œuvre le procédé de réception illustré par la figure 8.

Selon une étape 78, la réception R_{FE} du flux de données et l'interception I de l'indicateur de programmation d'acheminement de flux transmis simultanément par le routeur 14, l'indicateur de programmation 60 comprenant au moins, comme indiqué précédemment :
∘ un identifiant de l'équipement radio propre à acheminer le flux, et
∘ au moins un élément de programmation utilisable par l'équipement radio propre à acheminer le flux.

En particulier, l'interception I d'indicateur de programmation 60 comprend une capture (CAPTURE) instantanée d'un entête d'un premier paquet du flux de données enrichi FE reçu ainsi que la détection des éléments constitutifs de l'indicateur au moyen d'un dictionnaire de flux préalablement mémorisé et/ou mis à jour dans l'équipement radio 20. L'entête de paquet portant le ticket permet à l'équipement radio 20 de mémoriser les invariants de l'entête des paquets du flux à reconnaitre. En effet, selon le protocole de communication utilisé, la place de l'indicateur de programmation dans l'entête du premier paquet du flux de données à acheminer est propre varier, la reconnaissance mise en œuvre par l'équipement radio 20 est donc basée sur les invariants.

Selon un aspect non représenté mais réciproque du mode de réalisation représenté sur la figure 6, le procédé de réception comprend également une étape de déchiffrement de l'indicateur de programmation 60 s'il a été auparavant réciproquement chiffré par le dispositif 12 d'allocation dynamique.

Puis, selon une étape PROG, la programmation de l'acheminement du flux dans le sous-réseau en fonction de l'indicateur de programmation d'acheminement de flux est mise en œuvre par l'équipement radio 20 et ce en tout autonomie par rapport au dispositif 12 d'allocation dynamique (i.e. sans échanges supplémentaires OTA (de l'anglais « Over The Air »).

En effet, comme indiqué précédemment, l'indicateur de programmation 60 comprend au moins un élément de programmation appartenant au groupe comprenant au moins :
- un masque de champ invariant dans les entêtes de paquet du flux à acheminer, utilisable par l'équipement radio pour programmer la reconnaissance du flux à acheminer,
- un descripteur d'ordonnancement de flux propre à diriger le flux dans une succession de traitements adaptés à la requête d'acheminement,
- un intervalle temporel définissant la période d'applicabilité de l'indicateur.

En particulier, cette programmation PROG comprend au moins :
- une classification de paquets permettant de repérer les paquets d'un flux,
- un ordonnancement des paquets à émettre vers un équipement radio distant, et
- une logique de codage et de modulation de l'information à émettre sur le médium radio.

Ainsi, les procédés d'allocation dynamique, de transmission et de réception de flux enrichi et les dispositifs correspondants à savoir respectivement le dispositif 12 d'allocation dynamique, le routeur 14 et l'équipement radio 20 permettent de fournir des services garantis par requête préalable à chaque dispositif 12 d'allocation dynamique, notamment multi-clients, intervenant sur le chemin (i.e. route) de données à parcourir par un flux.

En d'autres termes, le canal entre allocateur 12 et équipement radio 20 est porté directement par le flux à servir enrichi de l'indicateur de programmation selon l'invention, ce qui permet d'éviter de dimensionner en ressource radio un plan de contrôle, et d'éviter de passer par des agrégations via des abonnements ou des classes de flux (passage à l'échelle, flexibilité), tout en permettant un nombre d'occurrences de début de flux à traiter très élevé. On obtient ainsi une flexibilité dynamique en termes de topologie radio.

Par ailleurs, le chiffrement de l'indicateur de programmation 60 permet avantageusement à l'équipement radio 20 destinataire de valider qu'il a bien été généré par l'allocateur 12 autorisé et qu'il est bien le destinataire autorisé.

En outre, l'homme du métier notera la capacité selon la présente invention à :
- chaîner plusieurs sous-réseaux radio 100 du cœur de réseau 10 en cascade pour constituer au travers de cette succession un chemin de données sur lequel un flux de donnée est acheminable avec une garantie de service,
- à s'intégrer au sein d'un réseau découpé en tranches ou « network slicing » en l'optimisant de sorte à permettre la gestion de flux élastiques (e.g. « rate-based TCP »), et
- à déclencher à l'avance des provisionnements synchronisés avec le service d'un flux (i.e. anticiper une réservation de service).

## Revendications

1. Procédé d'allocation dynamique de ressources radio mis en œuvre par un dispositif (12) d'allocation dynamique de ressources radio d'un réseau (10) de télécommunication à ressources partagées, le réseau comprenant également au moins : un routeur (14), un générateur (16) de flux de données, un gestionnaire (18) de bordure correspondant à un point de contrôle d'accès à un cœur de réseau (10) comprenant une pluralité de sous-réseaux radio (100), un sous-réseau radio (100) regroupant une pluralité de liaisons radios établies entre une pluralité d'équipements radio (20) coordonné par le dispositif d'allocation dynamique de ressources (12),
le procédé comprenant :
- la réception (R) d'une demande d'engagement de ressource(s) radio propre(s) à acheminer un flux de données objet d'une requête d'acheminement, la demande étant émise par le gestionnaire (18) de bordure destinataire de la requête d'acheminement formulée par le générateur (16) de flux de données,
- en fonction des conditions de propagation associées à d'autres acheminement(s) en cours et de niveau(x) de performance attendue, la sélection (S) des équipements radio aptes à acheminer le flux de données ainsi que les ressources radio propres à garantir son bon acheminement pendant sa durée de vie,
- l'élaboration (E) d'éléments de programmation propres à permettre à un équipement radio (20) d'exploiter les ressources radio sélectionnées,
- la génération (G) d'un indicateur de programmation d'acheminement de flux comprenant au moins :
∘ un identifiant de l'équipement radio (20) propre à acheminer le flux, et
∘ au moins un élément de programmation utilisable par l'équipement radio (20) propre à acheminer le flux,
- la transmission (T) de l'indicateur au gestionnaire (18) de bordure émetteur de la demande de ressource(s) radio.

2. Procédé d'allocation dynamique selon la revendication 1, dans lequel l'élaboration (E) d'éléments de programmation est cohérente avec des informations diffusées périodiquement par le dispositif (12) d'allocation dynamique de ressources radio pour coordonner l'ensemble des équipements radio (20) se partageant le même ensemble de ressources radio.

3. Procédé d'allocation dynamique selon la revendication 1 ou 2, dans lequel un chiffrement (C) de l'indicateur est mis en œuvre préalablement à la transmission (T), le chiffrement (C) étant effectué au moyen d'une clé de chiffrement associée à une clé de déchiffrement uniquement connue de l'équipement radio (20) propre à acheminer le flux et authentifiant l'origine de l'indicateur.

4. Procédé d'allocation dynamique selon la revendication 3, dans lequel le chiffrement (C) est un chiffrement (C) dont le schéma est basé sur l'identité.

5. Procédé d'allocation dynamique selon l'une quelconque des revendications précédentes dans lequel ledit au moins un élément de programmation appartient au groupe comprenant au moins :
- un masque de champ invariant dans les entêtes de paquet du flux à acheminer,
- un descripteur d'ordonnancement de flux propre à diriger le flux dans une succession de traitements adaptés à la requête d'acheminement,
- un intervalle temporel définissant la période d'applicabilité de l'indicateur.

6. Procédé de transmission d'un flux de données enrichi au sein d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur (10) de réseau comprenant une pluralité de sous-réseaux radio (100), un sous-réseau radio (100) comprenant une pluralité de liaisons radios établies entre une pluralité d'équipements radio (20),
le procédé de transmission étant mis en œuvre par le routeur, le procédé comprenant :
- la réception (R_I) d'un indicateur de programmation d'acheminement de flux émis par le gestionnaire (18) de bordure, l'indicateur comprenant au moins :
∘ un identifiant de l'équipement radio propre à acheminer le flux, et
∘ au moins un élément de programmation utilisable par l'équipement radio propre à acheminer le flux,
- la réception (R_F) du flux de donnée, émis par le générateur (16) de flux de données ayant au préalable requis l'acheminement du flux auprès du gestionnaire (18) de bordure émettant l'indicateur associé,
- transmission (T_{FE}) simultanée d'un flux de données enrichi, comprenant au moins le flux de donnée et l'indicateur, à l'équipement (20) radio propre à intercepter l'indicateur et acheminer le flux dans le sous-réseau (100) en fonction de l'indicateur.

7. Procédé de transmission selon la revendication 6, dans lequel préalablement à la transmission simultanée du flux de donnée enrichi le procédé comprend :
- l'insertion (I_I) de l'indicateur dans un entête d'un premier paquet du flux, ou
- la génération (G_S) d'une signalisation de contrôle parallèle comprenant l'indicateur.

8. Procédé de réception d'un flux de données enrichi d'un indicateur de programmation d'acheminement de flux au sein d'un réseau de télécommunication à ressources partagées, le réseau comprenant au moins : un dispositif d'allocation dynamique de ressources radio, un routeur, un générateur de flux de données, un gestionnaire de bordure correspondant à un point de contrôle d'accès à un cœur de réseau comprenant une pluralité de sous-réseaux radio, un sous-réseau radio regroupant une pluralité de liaisons radios établies entre une pluralité d'équipements radio,
le procédé de réception étant mis en œuvre par un desdits équipements radio pour acheminer le flux au sein d'un sous-réseau (100), le procédé comprenant :
- la réception du flux de données et l'interception de l'indicateur de programmation d'acheminement de flux transmis simultanément par le routeur (14), l'indicateur comprenant au moins :
∘ un identifiant de l'équipement radio propre à acheminer le flux, et
∘ au moins un élément de programmation utilisable par l'équipement radio propre à acheminer le flux,
- la programmation de l'acheminement du flux dans le sous-réseau (100) en fonction de l'indicateur de programmation d'acheminement de flux.

9. Procédé de réception d'un flux de données enrichi d'un indicateur selon la revendication 8, dans lequel l'interception d'indicateur comprend une capture instantanée d'un entête d'un premier paquet du flux de données enrichi reçu ainsi que la détection des éléments constitutifs de l'indicateur au moyen d'un dictionnaire de flux préalablement mémorisé et/ou mis à jour dans l'équipement radio.

10. Procédé de réception d'un flux de données enrichi d'un indicateur selon la revendication 8 ou la revendication 9, dans lequel un déchiffrement de l'indicateur est mis en œuvre préalablement à la programmation de l'acheminement.

## Patentansprüche

1. Verfahren zur dynamischen Zuweisung von Funkressourcen, das von einer Vorrichtung (12) zur dynamischen Zuweisung von Funkressourcen eines Telekommunikationsnetzes (10) mit gemeinsam genutzten Ressourcen durchgeführt wird, wobei das Netz gleichfalls mindestens umfasst: einen Router (14), einen Datenstromgenerator (16), eine Randverwaltungseinrichtung (18), die einem Zugangskontrollpunkt zu einem Kern des Netzes (10)entspricht, das eine Mehrzahl von Funksubnetzen (100) umfasst, wobei ein Funksubnetz (100) eine Mehrzahl von Funkverbindungen zusammenfasst, die zwischen einer von der Vorrichtung (12) zur dynamischen Zuweisung von Ressourcen koordinierten Mehrzahl von Funkeinrichtungen (20) hergestellt werden, wobei das Verfahren umfasst:
- Empfangen (R) einer Anfrage des Einsatzes einer bzw. mehrerer Funkressourcen, die geeignet sind, einen Datenstrom zu übertragen, der Gegenstand einer Übertragungsanfrage ist, wobei die Anfrage von der Randverwaltungseinrichtung gesendet wird, die Adressat der von dem Datenstromgenerator (16) formulierten Übertragungsanfrage ist,
- abhängig von Ausbreitungsbedingungen, die einer bzw. mehreren laufenden Übertragungen zugeordnet sind, und von Niveau(s) der erwarteten Leistung, Auswählen (S) von Funkeinrichtungen, die geeignet sind, den Datenstrom weiterzuleiten, sowie der Funkressourcen, die geeignet sind, seine gute Übertragung während seiner Lebensdauer zu gewährleisten,
- Erstellen (E) von Programmierungselementen, die geeignet sind, einer Funkeinrichtung (20) zu ermöglichen, die ausgewählten Funkressourcen zu nutzen,
- Erzeugen (G) eines Programmierungsindikators der Übertragung des Stromes, mindestens umfassend:
∘ eine Kennung der Funkeinrichtung (20), die geeignet ist, den Strom weiterzuleiten und
∘ mindestens ein von der für die Übertragung des Stroms geeigneten Funkeinrichtung (20) verwendbares Programmierungselement,
- Senden (T) des Indikators an die Randverwaltungseinrichtung, die die Funkressourcenanfrage gesendet hat.

2. Verfahren zur dynamischen Zuweisung nach Anspruch 1, bei dem das Erstellen (E) von Programmierungselementen zusammenhängend mit Informationen ist, die periodisch von der Vorrichtung (12) zur dynamischen Zuweisung von Funkressourcen gesendet werden, um die Gesamtheit der Funkeinrichtungen (20), die sich dieselbe Gesamtheit von Funkressourcen teilen, zu koordinieren.

3. Verfahren zur dynamischen Zuweisung nach Anspruch 1 oder 2, bei dem eine Verschlüsselung (C) des Indikators vor dem Senden (T) durchgeführt wird, wobei die Verschlüsselung (C) mittels eines Verschlüsselungsschlüssels durchgeführt wird, der einem Entschlüsselungsschlüssel zugeordnet ist, der nur der für die Übertragung des Stroms geeigneten Funkeinrichtung (20) bekannt ist und der den Ursprung des Indikators authentifiziert.

4. Verfahren zur dynamischen Zuweisung nach Anspruch 3, bei dem die Verschlüsselung (C) eine Verschlüsselung (C) ist, deren Schema auf der Identität basiert.

5. Verfahren zur dynamischen Zuweisung nach einem beliebigen der vorhergehenden Ansprüche, bei dem mindestens ein Programmierungselement zu der Gruppe gehört, die mindestens umfasst:
- eine invarianten Feldmaske in den Köpfen der Pakete des weiterzuleitenden Datenstroms,
- einen Deskriptor der Ablaufplanung des Stroms, der geeignet ist, den Strom in eine Folge von Verarbeitungen zu leiten, die an die Übertragungsanfrage angepasst sind,
- ein Zeitintervall, das den Zeitraum der Anwendbarkeit des Indikators definiert.

6. Verfahren zum Übertragen eines erweiterten Datenstroms in einem Telekommunikationsnetzes mit gemeinsam verwendeten Ressourcen, wobei das Netz mindestens umfasst: einen Router, einen Datenstromgenerator, eine Randverwaltungseinrichtung, das einem Zugangskontrollpunkt zu einem Kern des Netzes (10) entspricht, das eine Mehrzahl von Funksubnetzen (100) umfasst, wobei ein Funksubnetz (100) eine Mehrzahl von Funkverbindungen umfasst, die zwischen einer Mehrzahl von Funkeinrichtungen (20) erstellt sind,
wobei das Übertragungsverfahren von dem Router durchgeführt wird, wobei das Verfahren umfasst:
- Empfangen (R_I) eines Programmierungsindikators der Übertragung des Stroms, der von der Randverwaltungseinrichtung (18) gesendet wird, wobei der Indikator mindestens umfasst:
∘ eine Kennung der Funkeinrichtung, die geeignet ist, den Strom weiterzuleiten und
∘ mindestens ein von der für die Übertragung des Stroms geeigneten Funkeinrichtung verwendbares Programmierungselement,
- Empfangen (R_F) des Datenstroms, der von dem Datenstromgenerator (16) gesendet wird, der zuvor die Übertragung des Stroms von der Randverwaltungseinrichtung (18) durch Senden des zugeordneten Indikators angefordert hat,
- gleichzeitiges Senden (T_{FE}) eines erweiterten Datenstroms, der mindestens den Datenstrom und den Indikator umfasst, an die Funkeinrichtung (20), die geeignet ist, den Indikator aufzufinden und den Strom in das Subnetz (100) abhängig vom Indikator weiterzuleiten.

7. Übertragungsverfahren nach Anspruch 6, bei dem vor dem gleichzeitigen Senden des erweiterten Datenstroms das Verfahren umfasst:
- Einfügen (I_I) des Indikators in den Kopf des ersten Pakets des Stroms oder
- Erzeugen (G_S) einer parallelen Steuerungssignalisierung, die den Indikator enthält.

8. Verfahren zum Empfangen eines Datenstroms, der um einen Programmierungsindikator der Übertragung des Stroms in einem Telekommunikationsnetzes mit gemeinsam verwendeten Ressourcen erweitert ist, wobei das Netz mindestens umfasst: eine Vorrichtung zum dynamischen Zuweisen von Funkressourcen, einen Router, einen Datenstromgenerator, eine Randverwaltungseinrichtung, die einem Zugangskontrollpunkt zu einem Kern des Netzes entspricht, das eine Mehrzahl von Funksubnetzen umfasst, wobei ein Funksubnetz eine Mehrzahl von Funkverbindungen zusammenfasst, die zwischen einer Mehrzahl von Funkeinrichtungen erstellt sind,
wobei das Verfahren zum Empfangen von einer der Funkeinrichtungen durchgeführt wird, um den Strom in ein Subnetz (100) weiterzuleiten, wobei das Verfahren umfasst:
- Empfangen des Datenstroms und Auffinden des Indikators der Programmierung der Übertragung des gleichzeitig von dem Router (14) gesendeten Stroms,
wobei der Indikator mindestens umfasst:
∘ eine Kennung der Funkeinrichtung, die geeignet ist, den Strom weiterzuleiten und
∘ mindestens ein von der für die Übertragung des Stroms geeigneten Funkeinrichtung verwendbares Programmierungselement, ,
-- Programmieren der Übertragung des Stroms in dem Subnetz (100) abhängig von dem Indikator der Programmierung der Übertragung des Stroms.

9. Verfahren zum Empfangen eines um einen Indikator erweiterten Datenstroms nach Anspruch 8, bei dem das Auffinden des Indikators das unmittelbare Erfassen eines Kopfes eines ersten Pakets des empfangenen erweiterten Datenstroms sowie das Detektieren der Bestandteile des Indikators mittels eines vorher gespeicherten und/oder in der Funkeinrichtungen aktualisierten Datenstromwörterbuchs umfasst.

10. Verfahren zum Empfangen eines um einen Indikator erweiterten Datenstroms nach Anspruch 8 oder Anspruch 9, bei dem die Entschlüsselung des Indikators vor der Programmierung der Übertragung durchgeführt wird.

## Claims

1. A method for dynamically allocating radio resources implemented by a device (12) for dynamically allocating radio resources of a telecommunications network (10) with shared resources, the network also comprising at least: a router (14), a data stream generator (16), a border manager (18) corresponding to an access control point with a network core (10) comprising a plurality of radio subnetworks (100), a radio subnetwork (100) grouping together a plurality of radio links established between a plurality of pieces of radio equipment (20) coordinated by the device (12) for dynamically allocating radio resources,
the method comprising:
- receiving (R) a request to engage radio resources capable of conveying a data stream subject to a conveyance request, the request being sent by the border manager (18) receiving the conveyance request formulated by the data stream generator (16),
- depending on the propagation conditions associated with other conveyance(s) in progress and expected performance level(s), selecting (S) pieces of radio equipment capable of conveying the data stream as well as the radio resources capable of guaranteeing that it is conveyed properly during its lifetime,
- developing (E) programming elements capable of allowing a piece of radio equipment (20) to exploit the selected radio resources,
- generating (G) a programming indicator for conveying streams comprising at least:
∘ an identifier of the piece of radio equipment (20) capable of conveying the stream, and
∘ at least one programming element usable by the piece of radio equipment (20) capable of conveying the stream,
- transmitting (T) the indicator to the border manager (18) sending the radio resource request.

2. The dynamic allocation method according to claim 1, wherein the development (E) of programming elements is consistent with information broadcast periodically by the device (12) for dynamically allocating radio resources to coordinate all of the pieces of radio equipment (20) sharing the same set of radio resources.

3. The dynamic allocation method according to claim 1 or 2, wherein an encryption (C) of the indicator is carried out before the transmission (T), the encryption (C) being done using an encryption key associated with a decryption key known only by the radio equipment (20) capable of conveying the stream and authenticating the origin of the indicator.

4. The dynamic allocation method according to claim 3, wherein the encryption (C) is an identity-based encryption (C).

5. The dynamic allocation method according to any one of the preceding claims, wherein said at least one programming element belongs to the group comprising at least:
- an invariant field mask in the packet headers of the stream to be conveyed,
- a stream sequencing descriptor capable of orienting the stream in a series of processing operations suitable for the conveyance request,
- a time interval defining the applicability period of the indicator.

6. A method for transmitting a stream of enriched data within a telecommunications network with shared resources, the network comprising at least: a device for dynamically allocating radio resources, a router, a data stream generator, a border manager corresponding to an access control point with a network core (10) comprising a plurality of radio subnetworks (100), a radio subnetwork (100) comprising a plurality of radio links established between a plurality of pieces of radio equipment (20), the transmission method being implemented by the router, the method comprising:
- receiving (R_I) a programming indicator for conveying streams sent by the border manager (18), the indicator comprising at least:
∘ an identifier of the piece of radio equipment capable of conveying the stream, and
∘ at least one programming element usable by the piece of radio equipment capable of conveying the stream,
- receiving (R_F) the data stream, sent by the data stream generator (16) having requested the conveyance of the stream beforehand from the border manager (18) sending the associated indicator,
- simultaneously transmitting (T_{FE}) an enriched data stream, comprising at least the data stream and the indicator, to the piece of radio equipment (20) capable of intercepting the indicator and conveying the stream in the radio subnetwork (100) as a function of the indicator.

7. The transmission method according to claim 6, wherein before the simultaneous transmission of the enriched data stream, the method comprises:
- inserting (I_I) the indicator into a header of a first stream packet, or
- generating (G_S) a parallel control signal comprising the indicator.

8. A method for receiving a stream of data enriched by a programming indicator for conveying the stream within a telecommunications network with shared resources, the network comprising at least: a device for dynamically allocating radio resources, a router, a data stream generator, a border manager corresponding to an access control point with a network core comprising a plurality of radio subnetworks, a radio subnetwork grouping together a plurality of radio links established between a plurality of pieces of radio equipment,
the reception method being implemented by one of said pieces of radio equipment for conveying the stream within a subnetwork (100), the method comprising:
- receiving the data stream and intercepting the programming indicator for conveying the stream transmitted simultaneously by the router (14), the indicator comprising at least:
∘ an identifier of the piece of radio equipment capable of conveying the stream, and
∘ at least one programming element usable by the piece of radio equipment capable of conveying the stream,
- programming the conveyance of the stream in the subnetwork (100) as a function of the stream conveyance programming indicator.

9. The method for receiving a data flow enriched by an indicator according to claim 8, wherein the indicator interception comprises an instantaneous capture of a header of the first packet of the enriched data stream thus received as well as the detection of the component elements of the indicator via a stream dictionary previously stored and/or updated in the piece of radio equipment.

10. The method for receiving a data stream enriched by an indicator according to claim 8 or claim 9, wherein a decryption of the indicator is carried out before the programming of the conveyance.
